# EUROPEAN PATENT APPLICATION

(11) **EP 4 442 553 A1**
(43) Date of publication of application: **09.10.2024**
(21) Application number: 22901881.7
(22) Date of filing: 02.12.2022
(51) Int. Cl.: B63B 25/16, B63H 21/38, B63B 17/00, B63J 2/02, B63J 4/00, F02M 21/02, F01N 3/20, F01N 3/04, F17C 9/00

(54) **AMMONIA PROCESSING SYSTEM AND SHIP COMPRISING SAME**

(30) Priority: 03.12.2021 KR 20210172393; 04.04.2022 KR 20220041857; 04.04.2022 KR 20220041861; 11.04.2022 KR 20220044831; 11.04.2022 KR 20220044835; 11.04.2022 KR 20220044838
(71) Applicant: Hyundai Heavy Industries Co., Ltd., Ulsan 44032 (KR)
(72) Inventor: LEE, Tae Yeong, Seoul 03058 (KR); KIM, Mun Kyu, Ulsan 44032 (KR); HEO, Hee Seung, Seoul 03058 (KR); BAEK, Eun Sung, Seoul 03058 (KR); LEE, Kyung Won, Ulsan 44032 (KR)
(74) Representative: Betten & Resch
(86) International application number: PCT/KR2022/019541
(87) International publication number: WO 2023/101523

(57) **Abstract**

The present invention comprises: a fuel supply unit for supplying ammonia discharged from an ammonia storage tank to an engine; a fuel recovery unit for recovering excess ammonia returned from the engine; an exhaust processing unit for processing exhaust discharged from the engine; and a vent unit for discharging ammonia discharged from the fuel supply unit or the fuel recovery unit to the outside. The vent unit includes: a low-pressure discharge drum for collecting low-pressure ammonia discharged from the ammonia storage tank or the fuel supply unit; a high-pressure discharge drum for collecting high-pressure ammonia discharged from the fuel supply unit or the fuel recovery unit; and a discharge processor for processing ammonia and delivering the processed ammonia to a vent mast. The low-pressure discharge drum or the high-pressure discharge drum delivers ammonia to the exhaust processing unit or the exhaust processor.

## Description

### [Technical Field]

The present invention relates to an ammonia processing system and a ship including the same.

### [Background Art]

Air pollution is becoming serious around the world, and climate change is occurring due to the air pollution. Because pollutants emitted from ships have a significant impact on the air pollution, in order to reduce the air pollution, the International Maritime Organization (IMO), the European Union, the United States, and the like are strengthening regulations on pollutants emitted from ships.

As future regulations on greenhouse gas emissions from ships will be strengthened step by step at each major point until 2050, it is expected that it will be difficult to comply with regulations on pollutants with only existing engines and fuel.

Therefore, as the strengthened regulations on greenhouse gas emissions from the ships are applied, it is expected that it will be difficult to use existing fossil fuels currently used, and it is very urgent to discover alternative fuels capable of satisfying the regulations that will be strengthened in the future. As alternative fuels, non-fossil fuels such as ammonia (NH3), biofuel, solar energy, wind energy, or the like, are being considered.

Among them, ammonia is a chemical that can be produced, stored, transported, and supplied, and ammonia ships using ammonia as fuel are being developed.

Since existing ammonia ships store ammonia fuel in a liquid state, and ammonia has a boiling point lower than room temperature (-33 °C at atmospheric pressure), ammonia storage tanks also have to meet certain specifications to store ammonia in a liquid state. In addition, since the inside of the tank has to be maintained at a low temperature to maintain ammonia in a liquid state, the storage tank has to be cooled, and a lot of energy is consumed in a cooling process.

In addition, in the storage tank of liquid ammonia, an evaporated gas may be generated, so there is a risk that the pressure inside the storage tank rises due to the evaporated gas, causing the tank to explode, and when the liquid ammonia leaks outside the tank, it is likely that an explosion occurs and there is a risk of casualties due to the toxicity of ammonia.

As described above, the existing ammonia ships have limitations in that the ships are less efficient in terms of facility and operating costs and have lower facility safety in storing liquid ammonia fuel and supplying ammonia fuel to engines.

### [Disclosure]

### [Technical Problem]

The present invention has been conceived to solve the problems in the related art as described above, and is directed to providing an ammonia processing system ensuring stable and reliable fuel supply, efficient exhaust gas treatment, and the like when supplying ammonia as engine fuel, and a ship including the same.

### [Technical Solution]

An ammonia processing system according to one aspect of the present invention includes a fuel supply unit configured to supply ammonia discharged from an ammonia storage tank to an engine, a fuel recovery unit configured to recover excess ammonia returned from the engine, an exhaust gas treatment unit configured to treat an exhaust gas discharged from the engine, and a vent unit configured to discharge ammonia discharged from the fuel supply unit or the fuel recovery unit to the outside, the vent unit includes a low-pressure discharge drum configured to collect low-pressure ammonia discharged from the ammonia storage tank or the fuel supply unit, a high-pressure discharge drum configured to collect high-pressure ammonia discharged from the fuel supply unit or the fuel recovery unit, and a discharge processor configured to process ammonia and deliver the ammonia to a vent mast, and the low-pressure discharge drum or the high-pressure discharge drum delivers ammonia to the exhaust gas treatment unit or the discharge processor.

Specifically, the exhaust gas treatment unit may use at least some of the ammonia supplied to the engine by the fuel supply unit as a reducing agent.

Specifically, the low-pressure discharge drum and the high-pressure discharge drum may deliver at least some of the collected ammonia to the ammonia storage tank.

Specifically, the ammonia processing system may further include a re-liquefaction unit configured to re-liquefy an evaporated gas discharged from the ammonia storage tank, and the re-liquefaction unit may deliver at least some of the evaporated gas to the low-pressure discharge drum or the exhaust gas treatment unit.

Specifically, the fuel supply unit may include a low-pressure pump configured to transfer ammonia, a high-pressure pump configured to pressurize ammonia pressurized by the low-pressure pump to correspond to a required pressure of the engine, and a heat exchanger configured to adjust a temperature of ammonia, and the fuel recovery unit may include a cooler configured to cool the excess ammonia discharged from the engine and deliver the cooled ammonia between the low-pressure pump and the high-pressure pump in the fuel supply unit and a catch drum provided in parallel to the cooler and temporarily storing ammonia.

An ammonia processing system according to another aspect of the present invention includes a fuel supply unit configured to supply ammonia discharged from an ammonia storage tank to an engine, a fuel recovery unit configured to recover excess ammonia returned from the engine, an exhaust gas treatment unit configured to treat an exhaust gas discharged from the engine, and a vent unit configured to discharge ammonia discharged from the fuel supply unit or the fuel recovery unit to the outside, the exhaust gas treatment unit oxidizes ammonia, and the vent unit includes a discharge processor configured to collect ammonia discharged from the ammonia storage tank, the fuel supply unit, or the fuel recovery unit, mix water with the ammonia, and deliver the mixed ammonia to the exhaust gas treatment unit.

Specifically, the vent unit may further include a discharge drum configured to collect ammonia discharged from the ammonia storage tank, the fuel supply unit, or the fuel recovery unit and deliver the collected ammonia to the discharge processor or the exhaust gas treatment unit, and the discharge processor may collect the ammonia using water and deliver the ammonia water to the exhaust gas treatment unit.

Specifically, the ammonia processing system may further include a purging unit configured to purge the fuel supply unit or the fuel recovery unit using a non-explosive gas, and the purging unit may deliver the non-explosive gas to the discharge drum so that a pressure of the discharge drum is regulated to be higher than that of the discharge processor or the exhaust gas treatment unit.

An ammonia processing system according to still another aspect of the present invention includes a fuel supply unit configured to supply ammonia discharged from an ammonia storage tank to an engine, a fuel recovery unit configured to recover excess ammonia returned from the engine, an exhaust gas treatment unit configured to treat an exhaust gas discharged from the engine, and a vent unit configured to discharge ammonia discharged from the fuel supply unit or the fuel recovery unit to the outside, the fuel supply unit includes a low-pressure pump configured to transfer ammonia, a high-pressure pump configured to pressurize ammonia pressurized by the low-pressure pump to correspond to a required pressure of the engine, and a heat exchanger configured to adjust a temperature of ammonia, and the fuel recovery unit includes a cooler configured to cool the excess ammonia discharged from the engine and deliver the cooled ammonia between the low-pressure pump and the high-pressure pump in the fuel supply unit and a pressure regulating valve provided downstream of the cooler to maintain ammonia flowing from the fuel recovery unit toward the fuel supply unit at a saturation pressure or higher at a corresponding temperature.

Specifically, the fuel recovery unit may further include a mixer configured to mix the excess ammonia discharged from the engine with ammonia between the low-pressure pump and the high-pressure pump in the fuel supply unit, and the pressure regulating valve may be provided between the cooler and the mixer.

Specifically, the cooler may include a first cooler configured to cool the ammonia using a medium provided separately from ammonia and a second cooler provided downstream or upstream of the first cooler and using the ammonia from the fuel supply unit.

Specifically, the heat exchanger may include a first heat exchanger provided between the low-pressure pump and the high-pressure pump and a second heat exchanger provided between the high-pressure pump and the engine, the first heat exchanger may be provided between the mixer and the high-pressure pump, and the second heat exchanger may be provided between the second cooler and the engine.

A ship according to yet another aspect of the present invention includes the ammonia processing system.

### [Advantageous Effects]

An ammonia processing system according to the present invention and a ship including the same can not only efficiently supply ammonia to an ammonia engine, but also exhibit excellent performance in venting, purging, exhaust gas treatment, and the like.

### [Description of Drawings]

FIG. 1 is a conceptual diagram of an ammonia processing system according to a first embodiment of the present invention.
FIG. 2 is a conceptual diagram of the ammonia processing system according to the first embodiment of the present invention.
FIG. 3 is a conceptual diagram of the ammonia processing system according to the first embodiment of the present invention.
FIG. 4 is a conceptual diagram of the ammonia processing system according to the first embodiment of the present invention.
FIG. 5 is a conceptual diagram of an ammonia processing system according to a second embodiment of the present invention.
FIG. 6 is a conceptual diagram of an ammonia processing system according to a third embodiment of the present invention.
FIG. 7 is a conceptual diagram of an ammonia processing system according to a fourth embodiment of the present invention.
FIG. 8 is a conceptual diagram of an ammonia processing system according to a fifth embodiment of the present invention.

### [Modes of the Invention]

The objectives, specific advantages and novel features of the present invention will become more apparent from the following detailed description and preferred embodiments taken in conjunction with the accompanying drawings. In the present specification, in adding reference numerals to the components of each drawing, it should be noted that the same components are given the same reference numerals as much as possible even though they are shown on different drawings. Furthermore, in describing the present invention, when it is determined that the detailed description of the related known technology may obscure the subject matter of the present invention, the detailed description thereof will be omitted.

The present invention includes a ship equipped with an ammonia processing system described below. In this case, a ship is a concept including any of an ammonia carrier, a merchant ship transporting cargo or people other than ammonia, a floating storage regasification unit (FSRU), a floating production storage and offloading (FPSO), a bunkering vessel, an offshore plant, and the like.

Although not shown in the drawings of the present invention, a pressure sensor (PT), a temperature sensor (TT), a flow sensor (FT), or the like may be installed in appropriate locations without limitation, and measured values by each sensor may be used in various ways without limitation in the operation of components described below.

In addition, in the drawings of the present invention, straight lines represent flow paths through which various fluids such as ammonia, a heat medium, and a non-explosive gas move, and may be interpreted as pipelines.

Hereinafter, preferred embodiments of the present invention will be described in detail with reference to the accompanying drawings.

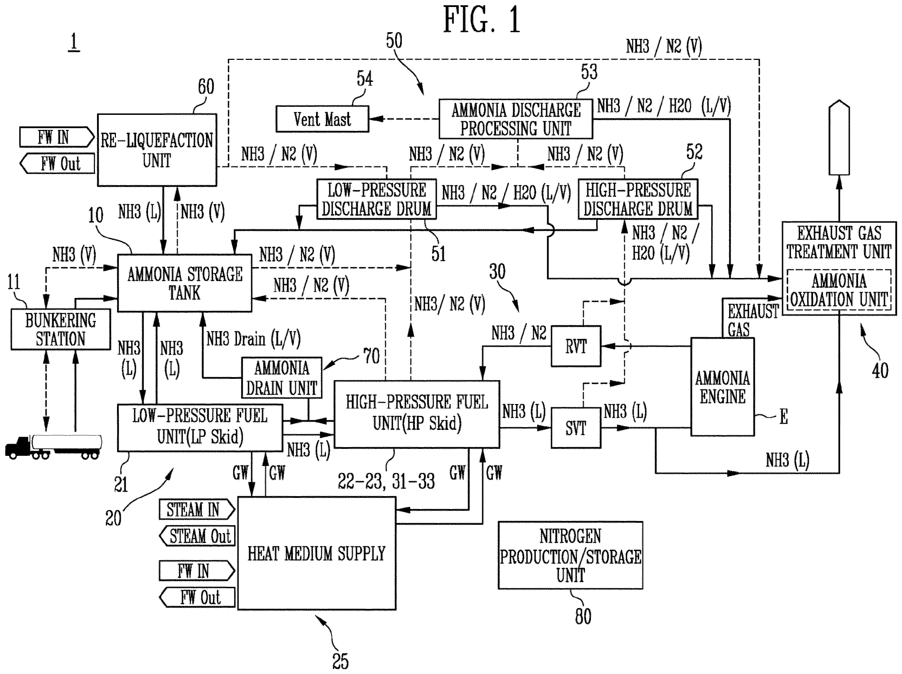

FIGS. 1 to 4 are conceptual diagrams of an ammonia processing system according to a first embodiment of the present invention.

Referring to FIGS. 1 to 4, an ammonia processing system 1 according to the first embodiment of the present invention includes an ammonia storage tank 10, a fuel supply unit 20, a fuel recovery unit, and an exhaust gas treatment unit 40, a vent unit 50, a re-liquefaction unit 60, a drain processing unit 70, and a purging unit 80.

The ammonia storage tank 10 stores ammonia. Ammonia is used as a fuel consumed by an engine E, and in this case, the engine E may be an ammonia-only engine E, an ammonia dual-fuel engine E, or the like. Of course, in the present specification, the engine E is an engine that obtains energy by consuming ammonia, and is interpreted to encompass turbines or the like.

The ammonia storage tank 10 may store ammonia in a liquid phase, and for this purpose, insulation may be applied to at least one side of the inside or outside of the ammonia storage tank 10. Alternatively, the ammonia storage tank 10 may prevent liquefaction of ammonia by storing ammonia at high pressure, and in this case, a low-pressure pump 21 of the fuel supply unit 20, which will be described below, may be reduced or omitted.

The ammonia storage tank 10 may be provided to form a cargo hold inside the ship, or may be a fuel tank provided separately inside the ship or on a deck. One or more ammonia storage tanks 10 may be provided, and when a plurality of ammonia storage tanks 10 are provided, ammonia may be consumed alternatively or simultaneously.

A bunkering unit 11 is connected to the ammonia storage tank 10. The bunkering unit 11 delivers ammonia from an external fuel source to the ammonia storage tank 10. The external fuel source may be an ammonia source on land or an ammonia bunkering ship on the sea.

The bunkering unit 11 may connect the ammonia storage tank 10 and the fuel source using a manifold, loading arm, or the like, and the fuel source delivers ammonia to the ammonia storage tank 10 at a certain pressure. However, as ammonia evaporates within the ammonia storage tank 10, an evaporated gas may be generated, which causes the internal pressure of the ammonia storage tank 10 to rise, resulting in a case where the pressure of the ammonia storage tank 10 is higher than that of the fuel source.

In this case, since the fuel source consumes a lot of loads in shipping ammonia to the ammonia storage tank 10, the bunkering unit 11 may use a bunkering compressor (not shown) to avoid the situation. The bunkering compressor compresses the evaporated gas generated in the ammonia storage tank 10 and delivers the compressed gas to the fuel source, thereby increasing the pressure of the fuel source so that the differential pressure between the fuel source and the ammonia storage tank 10 is secured. In this way, the bunkering unit 11 may smoothly supply ammonia from the fuel source to the ammonia storage tank 10.

Of course, the bunkering compressor may use an evaporated gas generated within the fuel source in addition to the evaporated gas within the ammonia storage tank 10. Alternatively, the bunkering compressor may increase the pressure of the fuel source by using a gas other than ammonia, but in this case, the fuel source may have a structure that delivers only ammonia to the ammonia storage tank 10.

The ammonia storage tank 10 may be provided with a pressure regulating unit 12. The pressure regulating unit 12 is a pressure build-up unit (PBU) that heats or evaporates the ammonia discharged from the ammonia storage tank 10 and then injects the heated or evaporated ammonia into the ammonia storage tank 10 to increase the internal pressure of the ammonia storage tank 10, or may be a sub-cooler that cools/sub-cools ammonia and returns the cooled/sub-cooled ammonia.

In addition to that, the pressure regulating unit 12 may be a re-liquefaction unit 60, and the pressure regulating unit 12 may secure the stability of ammonia fuel supply by increasing or decreasing the internal pressure of the ammonia storage tank 10.

The fuel supply unit 20 supplies ammonia from the ammonia storage tank 10 to the engine E. The fuel supply unit 20 may supply ammonia in a liquid phase, among the ammonia stored in the ammonia storage tank 10, to the engine E. In particular, considering the specifications of the engine E that currently consumes ammonia, the fuel supply unit 20 is provided to supply ammonia to the engine E in a liquid phase. Of course, the fuel supply unit 20 may adjust a state of ammonia in various ways in response to changes of the specifications of the engine E.

The fuel supply unit 20 may be divided into a low-pressure part and a high-pressure part, and the low-pressure part and the high-pressure part may be formed as skids. In addition, a skid (LP Skid) on which the low-pressure part is provided and a skid (HP Skid) on which the high-pressure part is provided may be separately provided, and may have an interconnectable structure.

For the low-pressure skid (LP Skid), the ammonia storage tank 10 may be provided in addition to the component of the fuel supply unit 20, while for the high-pressure skid (HP Skid), components of the fuel recovery unit, which will be described below, may be provided together in addition to the component of the fuel supply unit 20.

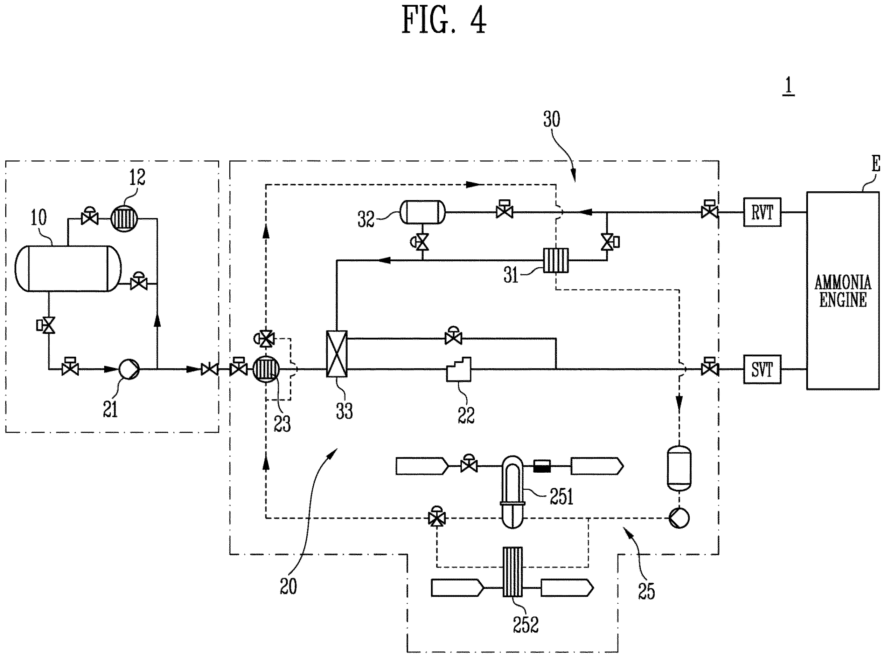

Referring to FIG. 4, the low-pressure part of the fuel supply unit 20 includes a low-pressure pump 21. The low-pressure pump 21 is responsible for withdrawing ammonia stored in the ammonia storage tank 10 to the outside, and may be provided as a fixed capacity type or variable capacity type (VFD).

The low-pressure pump 21 may be disposed downstream of the ammonia storage tank 10 as shown in the drawing, but may also be disposed within the ammonia storage tank 10. Furthermore, as described above, the low-pressure pump 21 may be omitted depending on the type, internal pressure, and the like of the ammonia storage tank 10.

Unlike in the drawing, a plurality of low-pressure pumps 21 may be provided to form a structure capable of backing up each other, and a plurality of low-pressure pumps 21 may be provided to share a load by simultaneously operating. Alternatively, a plurality of low-pressure pumps 21 may be provided in series to utilize a multi-stage pressurization method.

A constant flow rate of ammonia has to be continuously introduced into the low-pressure pump 21, which is essential for a stable operation of the low-pressure pump 21. The flow rate is referred to as net positive suction head (NPSHr), and ammonia of a flow rate greater than the net positive suction head flows into the low-pressure pump 21.

However, since the flow rate required by the engine E may be less than the net positive suction head, a flow path for returning ammonia to the ammonia storage tank 10 may be provided downstream of the low-pressure pump 21. In this case, a return path connected to the ammonia storage tank 10 downstream of the low-pressure pump 21 may be connected to the pressure regulating unit 12.

Referring again to FIG. 4, the high-pressure part of the fuel supply unit 20 includes a high-pressure pump 22 and a heat exchanger 23. The high-pressure pump 22 pressurizes the ammonia pressurized by the low-pressure pump 21 to correspond to a required pressure of the engine E. As described for the low-pressure pump 21, one or more high-pressure pumps 22 may be provided in series or parallel.

The high-pressure pump 22 may be provided as the variable capacity type, and a load may vary depending on a measured value of a flowmeter that may be provided between the low-pressure pump 21 and the high-pressure pump 22. In this case, the flow meter may be provided at a position at which a flow rate of excess ammonia recovered by the fuel recovery unit is reflected.

The fuel recovery unit, which will be described below, may deliver excess ammonia discharged from the engine E to the high-pressure pump 22, but due to the specifications of the high-pressure pump 22, introduction of the ammonia in gas phase thereinto is not desirable. Therefore, the ammonia upstream of the high-pressure pump 22 is required to exist only in a liquid phase, and for this purpose, the temperature and pressure upstream of the high-pressure pump 22 may be effectively controlled.

As one example, the ammonia recovered by the fuel recovery unit may be cooled, and the ammonia upstream of the high-pressure pump 22 may be maintained at high pressure to increase a boiling point of ammonia so that evaporation is suppressed.

As described in the low-pressure pump 21, the ammonia at a flow rate for satisfying the net positive suction head (minimum flow) is continuously introduced into the high-pressure pump 22, and a return line is provided downstream of the high-pressure pump 22 in case excess ammonia occurs. The return line allows excess ammonia above the flow rate to be supplied to the engine E to circulate from the downstream of the high-pressure pump 22 to the upstream thereof, and may be connected to the mixer 33 of the fuel recovery unit.

The heat exchanger 23 adjusts the temperature of ammonia. The heat exchanger 23 may be provided between the low-pressure pump 21 and the high-pressure pump 22 and may be disposed on the high-pressure skid. The heat exchanger 23 may adjust the temperature of the ammonia corresponding to the required temperature of the engine E using a heat medium such as glycol water (GW) or the like.

The heat exchanger 23 may be a heater for heating ammonia. Since the required temperature of the engine E is generally higher than the storage temperature of the ammonia storage tank 10 (equal to or lower than the boiling point of ammonia at atmospheric pressure) and the temperature increase occurring when the low-pressure pump 21 and high-pressure pump 22 are pressurized is insufficient to meet the required temperature of the engine E, the heat exchanger 23 may be used.

However, the heat exchanger 23 may be provided upstream of the high-pressure pump 22 so that the temperature of ammonia is appropriately adjusted so as to prevent ammonia in gas phase from being introduced into the high-pressure pump 22. In this case, the heat exchanger 23 controls the heating temperature of ammonia considering that ammonia is recovered by the fuel recovery unit.

The fuel supply unit 20 includes a heat medium supply unit 25 for supplying the heat medium to the heat exchanger 23, or the like. The heat medium supply unit 25 may circulate and supply the heat medium such as glycol water to the heat exchanger 23, and when necessary, the heat medium may be replenished or discharged on a heat medium circulation flow path. Alternatively, the heat medium supply unit 25 may be provided in a continuous providing form so that a new heat medium passes through the heat exchanger 23.

The heat medium supply unit 25 may heat or cool the temperature of the heat medium to appropriately adjust the temperature of the ammonia that is heat-exchanged with the heat medium in the heat exchanger 23. To this end, the heat medium supply unit 25 may be equipped with both a heat medium heater 251 and a heat medium cooler 252.

The heat medium heater 251 may be a component that heats the heat medium with a heat source such as steam or the like, and may sufficiently raise the temperature of the heat medium after the heat medium is cooled by the ammonia in the heat exchanger 23 and before the heat medium is introduced into the heat exchanger 23 again. In this case, the heating temperature may be adjusted by at least some of the heat medium bypassing the heat medium heater 251.

The heat medium cooler 252 may be a component that heats the heat medium with a cold source such as fresh water, and may appropriately adjust the temperature of ammonia introduced into the high-pressure pump 22 by lowering the temperature of the heat medium in an operating state or the like where there is a relatively large amount of the high-temperature ammonia recovered by the fuel recovery unit. Alternatively, the heat medium cooler 252 may cool the heat medium heated by the cooler 31 of the fuel recovery unit, which will be described below. Cooling of the heat medium cooler 252 may also be controlled using partial bypass of the heat medium or the like as in the heat medium heater 251.

The heat medium cooler 252 and the heat medium heater 251 may be provided in parallel, or may be provided in series and operated alternatively. It is noted that regarding the disposition and operation of the heat medium cooler 252 and the heat medium heater 251, various modifications for efficiently adjusting the temperature of the heat medium are possible.

The fuel supply unit 20 may be provided with a valve for adjusting the supply flow rate of ammonia and the like just before the engine E, and in this case, the valve may be referred to as a fuel supply valve train SVT.

The fuel recovery unit recovers excess ammonia returned from the engine E. The ammonia engine E, which has been developed or is currently under development, receives and consumes ammonia in a liquid phase, but has a structure in which excess ammonia is supplied in order to stably supply the required flow rate.

In this case, the excess ammonia may pass through at least a portion of the engine E and then, be discharged from the engine E. In this case, lubricant used in the engine E may be mixed with ammonia. Therefore, the excess ammonia discharged from the engine E is in a contaminated state, and it is not desirable that the excess ammonia returns to the ammonia storage tank 10.

However, since the excess ammonia is in a state of being available to be consumed by the engine E, the fuel recovery unit delivers the excess ammonia discharged from the engine E to the fuel supply unit 20. Specifically, the fuel recovery unit may deliver the excess ammonia from the fuel supply unit 20 to the high-pressure pump 22, and includes a cooler 31, a catch drum 32, and a mixer 33, as shown in FIG. 4.

The cooler 31 cools the excess ammonia discharged from engine E. Since the excess ammonia has passed through the engine E, the excess ammonia may be in a heated state due to heat generation from the engine E, and when the excess ammonia is returned as it is and introduced into the high-pressure pump 22, introduction of ammonia in gas phase into the high-pressure pump 22 may be induced. Therefore, the cooler 31 cools the excess ammonia with fresh water or the like and delivers the cooled ammonia between the low-pressure pump 21 and the high-pressure pump 22 in the fuel supply unit 20, thereby suppressing the introduction of the ammonia in gas phase into the high-pressure pump 22.

The cooler 31 may utilize a heat medium of the heat exchanger 23. That is, the heat medium circulation flow path of the heat medium supply unit 25 may be provided to pass through the cooler 31, and the cooler 31 may be disposed downstream of the heat exchanger 23 based on the flow of the heat medium.

Therefore, the heat medium is cooled while heating ammonia in the heat exchanger 23, and then heated while cooling the excess ammonia in the cooler 31. Then, the heat medium is introduced into the heat exchanger 23 again, and in this case, the heat medium heater 251 and/or the heat medium cooler 252 may properly adjust the temperature of the heat medium introduced into the heat exchanger 23.

The catch drum 32 is provided in parallel to the cooler 31 and temporarily stores ammonia. The catch drum 32 may be a component that separates the excess ammonia into a gas and liquid, thereby preventing ammonia in gas phase from being introduced into the high-pressure pump 22. In addition, the catch drum 32 may be provided to remove the lubricant contained in the excess ammonia.

Unlike the drawing, the catch drum 32 may have a structure including a gas-liquid separator and a knockout drum. In this case, the excess ammonia first is introduced into the gas-liquid separator so that ammonia in gas phase is separated, and at least some of the excess ammonia in a liquid phase is introduced into the knockout drum so that the lubricant is separated. That is, the separation of ammonia in gas phase and lubricant described above may be achieved by a separate component, but for convenience, the component that implements the functions may be encompassed by the catch drum 32.

The mixer 33 mixes the excess ammonia discharged from the engine E with the ammonia between the low-pressure pump 21 and the high-pressure pump 22 in the fuel supply unit 20. The mixer 33 may mix the ammonia that has passed through the cooler 31 or the catch drum 32 with the ammonia in the fuel supply unit 20, and may be provided as a container-type mixer, an in-line mixer, or the like.

The fuel recovery unit may be equipped with a valve to control the return flow rate or the like of ammonia right behind the engine E, and in this case, the valve may be referred to as a fuel return valve train RVT.

The exhaust gas treatment unit 40 treats an exhaust gas discharged from the engine E. The exhaust gas of the engine E may contain environmental pollutants such as various particles, nitrogen oxides (NOx), and the like, and the exhaust gas treatment unit 40 may properly treat pollutants in the exhaust gas using filtering, chemical reactions, or the like.

As one example, the exhaust gas treatment unit 40 may be a selective catalytic reduction device (SCR) or a scrubber. However, in the present embodiment, the exhaust gas treatment unit 40 may be provided to include at least the SCR, and ammonia or the like may be used as a reducing agent.

The reducing agent used by the exhaust gas treatment unit 40 may be supplied separately from the outside, or may be delivered from the fuel supply unit 20 or the like. That is, the fuel supply unit 20 may deliver some of the ammonia flowing toward the engine E to the exhaust gas treatment unit 40 in at least a portion of the low-pressure part or the high-pressure part. Therefore, the exhaust gas treatment unit 40 may use at least some of the ammonia supplied to the engine E by the fuel supply unit 20 as the reducing agent. However, ammonia in the high-pressure part of the fuel supply unit 20 may be delivered to the exhaust gas treatment unit 40 after lowering the pressure using a valve or the like.

In addition, the exhaust gas treatment unit 40 may reduce nitrogen oxides and the like contained in the exhaust gas of the engine E by using ammonia delivered from the vent unit 50, which will be described below, as the reducing agent.

The engine E of the present embodiment is an engine E that consumes ammonia, and some ammonia may be mixed in the exhaust gas (ammonia slip). In this case, the exhaust gas treatment unit 40 may oxidize and reduce the ammonia contained in the exhaust gas.

Oxidation of ammonia may be achieved by the SCR. That is, the SCR reduces nitrogen oxides using ammonia, and the exhaust gas treatment unit 40 may cause ammonia and nitrogen oxides contained in the exhaust gas to react with each other to oxidize ammonia.

Alternatively, oxidation of ammonia may be done separately from the SCR. In this case, the oxidation of ammonia may be a reaction in which ammonia and oxygen react to produce nitrogen oxides and water (4NH3 + 502 -> 4NO + 6H2O), and the nitrogen oxides produced at this time may be reduced by the SCR described above. However, in this case, it is desirable that ammonia oxidation occurs before reduction of the SCR.

Therefore, the exhaust gas treatment unit 40 may implement ammonia oxidation and nitrogen oxide reduction at the same time by including only a nitrogen oxide reduction unit (not shown), which is the SCR, or the exhaust gas treatment unit 40 may include a nitrogen oxide reduction unit (not shown) and an ammonia oxidation unit (not shown).

In the latter case, the ammonia oxidation unit is disposed upstream of the nitrogen oxide reduction unit so that the ammonia mixed in the exhaust gas due to ammonia slip is changed into nitrogen oxide and water. Then, the nitrogen oxide reduction unit changes nitrogen oxides into nitrogen and water (4NO + 4NH3 + O2 -> 2N2 + 3H2O) by using ammonia as a reducing agent, thereby ensuring that the ratio of ammonia or nitrogen oxides in the exhaust gas is within a standard.

Of course, the exhaust gas treatment unit 40 may be equipped with an ammonia filter (not shown) for filtering out the ammonia mixed in the exhaust gas, and a separate ammonia other than the ammonia in the exhaust gas may be used as the reducing agent in the nitrogen oxide reduction unit, or the ammonia oxidation unit may be minimized or omitted.

The exhaust gas treatment unit 40 may sufficiently purify the exhaust gas of the engine E and then discharge the gas into the atmosphere. The exhaust gas purified by the exhaust gas treatment unit 40 is discharged to the outside through a funnel having a certain height and treated so as not to cause harm to people.

The vent unit 50 discharges the ammonia discharged from the fuel supply unit 20 to the outside. The vent unit 50 serves to remove ammonia in the system in abnormal situations, such as when an ammonia leak is detected or the system is shut down due to a stoppage of the engine E.

The vent unit 50 may be provided to discharge ammonia discharged from the ammonia storage tank 10, the fuel recovery unit, or the like, in addition to the fuel supply unit 20 to the outside. That is, the vent unit 50 is connected to parts where ammonia is stored or flows throughout the system, thereby ensuring rapid and safe discharge of ammonia.

The vent unit 50 includes discharge drums 51 and 52, a discharge processor 53, and a vent mast 54. The discharge drums 51 and 52 collect ammonia discharged from the ammonia storage tank 10, the fuel supply unit 20, the fuel recovery unit, or the like.

The discharge drums 51 and 52 are in the form of containers and receive ammonia from the fuel supply unit 20 or the like. In this case, the ammonia delivered to the discharge drums 51 and 52 may be in a gas or liquid state, but may mainly be in gas phase.

The discharge drums 51 and 52 may collect ammonia using water. That is, water may be stored in the discharge drums 51 and 52, and ammonia introduced into the discharge drums 51 and 52 is dissolved in water to generate ammonia water.

The ammonia introduced into the discharge drums 51 and 52 may be delivered to the discharge processor 53, which will be described below, or may be delivered to the exhaust gas treatment unit 40. That is, the ammonia water from the discharge drums 51 and 52 may be supplied to the exhaust gas treatment unit 40 so that the ammonia is used as the reducing agent in the exhaust gas treatment unit 40 or oxidized in the exhaust gas treatment unit 40.

The discharge drums 51 and 52 may be divided into a low-pressure discharge drum 51 and a high-pressure discharge drum 52. The low-pressure discharge drum 51 collects ammonia discharged from the aforementioned low-pressure part, and the high-pressure discharge drum 52 collects ammonia discharged from the high-pressure part. That is, the low-pressure discharge drum 51 may collect low-pressure ammonia discharged from the ammonia storage tank 10, the low-pressure pump 21 of the fuel supply unit 20, or the like, and the high-pressure discharge drum 52 may collect high-pressure ammonia discharged from the heat exchanger 23 and the high-pressure pump 22 of the fuel supply unit 20 or the cooler 31 and the catch drum 32 of the fuel recovery unit, or the like.

As described above, the low-pressure discharge drum 51 and the high-pressure discharge drum 52 may deliver ammonia to the discharge processor 53 or the exhaust gas treatment unit 40. In the former case, ammonia may be delivered to the discharge processor 53 in a gaseous state, and in the latter case, ammonia may be delivered to the exhaust gas treatment unit 40 in the form of ammonia water to be used as the reducing agent or oxidized.

Alternatively, the low-pressure discharge drum 51 and the high-pressure discharge drum 52 may deliver at least some of the collected ammonia to the ammonia storage tank 10 or the like. That is, the low-pressure discharge drum 51 may have a structure capable of separating ammonia, and thus only ammonia may be recovered to the ammonia storage tank 10.

Instead of separating ammonia and delivering the separated ammonia to the ammonia storage tank 10, the low-pressure discharge drum 51 may deliver a mixed fluid of ammonia and water to the ammonia storage tank 10, but may use a filter (not shown) for filtering out substances other than ammonia in the middle.

That is, the discharge drums 51 and 52 may recover the collected ammonia to the ammonia storage tank 10, and when the recovery is difficult, the discharge drums 51 and 52 may deliver the collected ammonia to the exhaust gas treatment unit 40. In addition, gaseous ammonia may be sent to the discharge processor 53 from the discharge drums 51 and 52 and processed there.

The low-pressure discharge drum 51 may directly deliver ammonia to the ammonia storage tank 10 or the discharge processor 53, and on the other hand, since the high-pressure discharge drum 52 has a large internal pressure difference compared to the ammonia storage tank 10 or the like, the ammonia in the high-pressure discharge drum 52 may be delivered to the ammonia storage tank 10 after being reduced in pressure using a valve or the like.

Conversely, when the pressure of the discharge drums 51 and 52 is insufficient, the internal pressure of the discharge drums 51 and 52 may be increased using the purging unit 80. As will be described below, the purging unit 80 may be a component that purges the fuel supply unit 20 and/or the fuel recovery unit using a non-explosive gas such as nitrogen, and the purging unit 80 may inject the non-explosive gas into the discharge drums 51 and 52 when it is necessary to increase the pressure of the discharge drums 51 and 52.

Therefore, the internal pressure of the discharge drums 51 and 52 may be sufficiently increased by the purging unit 80, and in this way, the ammonia stored in the discharge drums 51 and 52 may be smoothly delivered to the ammonia storage tank 10, the discharge processor 53, or the exhaust gas treatment unit 40 without separate pressurization or compression.

The discharge processor 53 processes ammonia and delivers the processed ammonia to the vent mast 54. The discharge processor 53 collects ammonia delivered from the discharge drums 51 and 52 and ensures that the ammonia is delivered to the vent mast 54 within a certain standard (for example, 30 ppm).

The discharge processor 53 may be a component that collects ammonia using water and may be a water tank that dissolves ammonia in water, or a water scrubber that sprays water on ammonia, and in this case, the substance delivered from the discharge drums 51 and 52 to the vent mast 54 through the discharge processor 53 may mainly be nitrogen.

The discharge processor 53 may deliver ammonia water produced by mixing ammonia with water to the exhaust gas treatment unit 40. That is, the ammonia collected by the discharge processor 53 may be used as a reducing agent in the exhaust gas treatment unit 40, and in this case, a discharge pump 531 may be used.

However, the discharge processor 53 may adjust a ratio of water to ammonia depending on the operating state of the exhaust gas treatment unit 40. That is, the discharge processor 53 may adjust an introduction amount of the ammonia water obtained by mixing ammonia with water so that the exhaust gas treatment unit 40 maintains a normal operation. In this case, the discharge processor 53 and the exhaust gas treatment unit 40 may mutually control the delivery of the ammonia water through appropriate sensors and signal transmission.

For example, the exhaust gas treatment unit 40 may be equipped with a sensor for measuring pollutants in a discharged exhaust gas, and the discharge processor 53 may adjust the specifications of the ammonia water delivered to the exhaust gas treatment unit 40 according to the measured value of the sensor. In addition/Alternatively, the temperature, pressure, flow rate, and the like of the exhaust gas introduced into the exhaust gas treatment unit 40 may be used as control variables of the discharge processor 53.

The re-liquefaction unit 60 re-liquefies the evaporated gas discharged from the ammonia storage tank 10. The re-liquefaction unit 60 may re-liquefy ammonia using a separate refrigerant other than ammonia (indirect type). In this case, the refrigerant may be nitrogen, mixed refrigerant, or the like.

Alternatively, the re-liquefaction unit 60 may be provided as a direct type that implements re-liquefaction of ammonia using heat exchange between ammonia. As one example, the re-liquefaction unit 60 may compress and cool ammonia, and then depressurize and liquefy some of the cooled ammonia so that the liquefied ammonia is used as a refrigerant for liquefying the remaining portion.

With respect to the method by which the re-liquefaction unit 60 re-liquefies ammonia, various known re-liquefaction devices may be used, and a detailed description thereof will be omitted.

The re-liquefaction unit 60 may deliver at least some of the evaporated gas to the low-pressure discharge drum 51 or the exhaust gas treatment unit 40. The re-liquefaction unit 60 may be equipped with a compressor (not shown) to improve the liquefaction performance of the evaporated gas, and the evaporated gas compressed by the compressor of the re-liquefaction unit 60 may be delivered to the low-pressure discharge drum 51 to contribute to the increase in internal pressure of the low-pressure discharge drum 51. Alternatively, the re-liquefaction unit 60 may compress and deliver the evaporated gas to assist the pressure of ammonia delivered from the discharge drums 51 and 52 or the discharge processor 53 to the exhaust gas treatment unit 40.

In this case, the re-liquefaction unit 60 may adjust a load of the compressor based on the internal pressure of the discharge drums 51 and 52, or the like. That is, the re-liquefaction unit 60 may operate the compressor exclusively for re-liquefaction when it is necessary to re-liquefy an ammonia evaporated gas, and may operate the compressor for ammonia delivery when it is necessary to deliver the ammonia evaporated gas. In this case, the re-liquefaction unit 60 may be provided with one or more compressors, one of which may be used for re-liquefaction and the other of which may be used for ammonia delivery.

Of course, the re-liquefaction unit 60 may also deliver the ammonia discharged from the ammonia storage tank 10 to the discharge drums 51 and 52, the exhaust gas treatment unit 40, or the like in a pre-compression state, and in this case, the load on the compressor may be lowered as some of the evaporated gas discharged from the ammonia storage tank 10 is delivered to the discharge drums 51 and 52, or the like.

The drain processing unit 70 recovers ammonia drained from the fuel supply unit 20 or the fuel recovery unit to the ammonia storage tank 10. That is, the drain processing unit 70 may collect the ammonia remaining in the low-pressure part, the high-pressure part, the fuel supply valve train, the fuel recovery unit, and the fuel return valve train, or the like of the fuel supply unit 20, thereby minimizing the amount going to the discharge processor 53 through the discharge drums 51 and 52 in the fuel supply unit 20.

The drain processing unit 70 may recover the drained ammonia when the engine E is stopped and ammonia remaining in the fuel supply unit 20, or the like is to be recovered, or when the system is purged. That is, drain may be separately performed from purging or may be performed during purging.

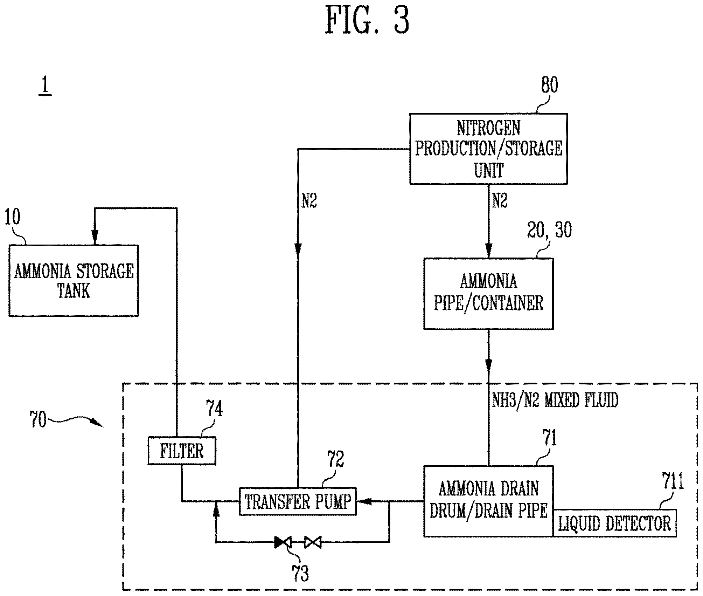

The drain processing unit 70 may be structurally disposed below the fuel supply unit 20 so that the ammonia in a liquid phase is smoothly drained, and when necessary, may return the drained ammonia to the ammonia storage tank 10. The drain processing unit 70 may include a drain drum 71, a drain pump 72, and a drain valve 73, as shown in FIG. 3.

The drain drum 71 collects ammonia drained from the fuel supply unit 20. The drain drum 71 is provided in the form of a container and may collect a certain amount of ammonia. However, since for smoothly draining of the fuel supply unit 20 or the like, a non-explosive gas of the purging unit 80 may be injected into the fuel supply unit 20 or the like, the ammonia introduced into the drain drum 71 may be mixed with the non-explosive gas.

The drain drum 71 is provided with a liquid detector 711. The liquid detector 711 detects liquid droplets in the drain drum 71, and as described above, since the ammonia or non-explosive gas is introduced into the drain drum 71, when the liquid droplets are detected by the liquid detector 711, it may be viewed as meaning that draining has occurred. Therefore, when ammonia drain is detected, the ammonia in the drain drum 71 may be recovered by the drain pump 72, which will be described below.

The drain pump 72 delivers the ammonia in the drain drum 71 to the ammonia storage tank 10. When the liquid detector 711 detects that ammonia is introduced into the drain drum 71, the drain pump 72 may pump the ammonia in the drain drum 71. In this case, the liquid detector 711 may detect ammonia at a certain level in the drain drum 71, thereby allowing the drain pump 72 to operate when the drained ammonia reaches or exceeds a certain amount.

However, it may be operationally preferable to immediately recover the drained ammonia to the ammonia storage tank 10 rather than continuously storing the ammonia in the drain drum 71. Therefore, the drain pump 72 may be provided as a type that does not cause problems even when a gas is introduced.

As one example, considering that the introduced fluid may contain a gas, the drain pump 72 may be provided as a low-speed pump that uses nitrogen or instrument air as a driving force. Therefore, the function of the drain pump 72 may not be damaged even when a gas is introduced into the drain pump 72.

As one example, the drain pump 72 may be provided as a type that operates using the non-explosive gas of the purging unit 80 as a driving source. Therefore, since the drain processing unit 70 uses the non-explosive gas of the purging unit 80 as a driving source to recover ammonia to the ammonia storage tank 10, the risk may be minimized by not using combustion substances during drain processing.

The drain valve 73 is provided in parallel to the drain pump 72 and delivers the ammonia in the drain drum 71 to the ammonia storage tank 10. The drain valve 73 may be used in place of the drain pump 72 when the internal pressure of the drain drum 71 is high.

The drain valve 73 is a non-return valve, and may open when high-pressure fluid is introduced into the drain drum 71, allowing ammonia to be recovered to the ammonia storage tank 10 by utilizing a differential pressure between the drain drum 71 and the ammonia storage tank 10 even without operating the drain pump 72.

Of course, the operation of the drain valve 73 and the operation of the drain pump 72 are linked, and thus, when the drain valve 73 is opened, the introduction of ammonia into the drain pump 72 may be blocked, and conversely, when the drain pump 72 is operated, the drain valve 73 may be closed.

A filter 74 may be provided downstream of the drain pump 72 and the drain valve 73. The filter 74 is used to remove impurities present in ammonia, and a known membrane filter or the like may be used.

The purging unit 80 purges the fuel supply unit 20, the fuel recovery unit, and the like using nitrogen, which is a non-explosive gas. The purging unit 80 may operate when the ammonia flow path in the system needs to be emptied, and purge the ammonia flow path using a non-explosive gas such as nitrogen as a purging gas.

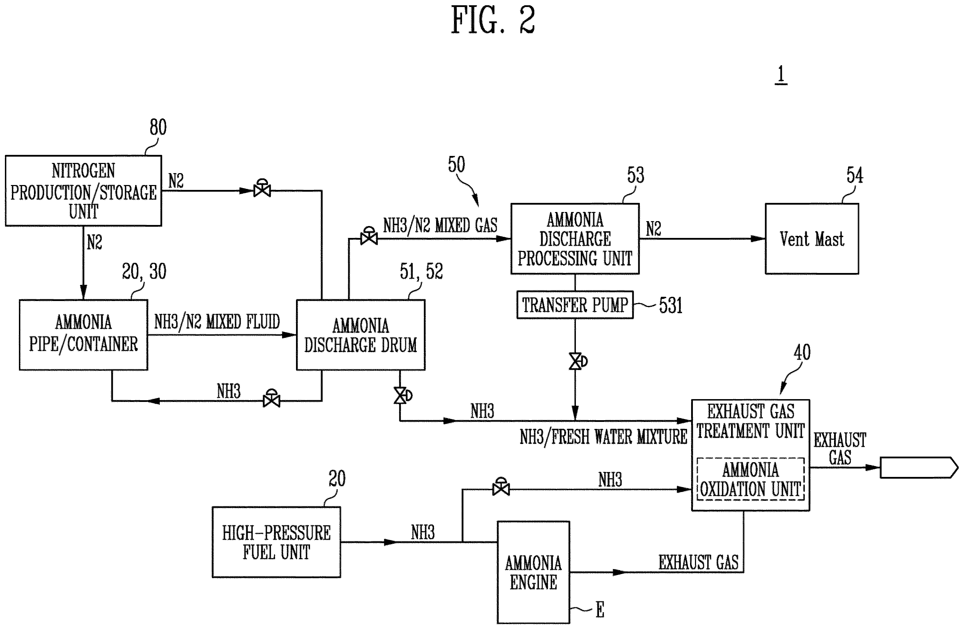

The purging unit 80 may deliver the non-explosive gas to the discharge drums 51 and 52 as shown in FIG. 2. When the internal pressure of the discharge drums 51 and 52 is not sufficient, the present embodiment may inject nitrogen or the like into the discharge drums 51 and 52 using the purging unit 80 to increase the internal pressure of the discharge drums 51 and 52, allowing the flow of ammonia from the discharge drums 51 and 52 to the discharge processor 53 to be smoothly adjusted.

Further, the purging unit 80 may supply the non-explosive gas as a driving source for the drain processing unit 70 to recover ammonia to the ammonia storage tank 10, as shown in FIG. 3. As one example, the purging unit 80 may implement the operation of the drain pump 72 by supplying the non-explosive gas to the drain pump 72, or may implement delivery of ammonia through the drain valve 73 by injecting the non-explosive gas into the drain drum 71.

That is, considering the purging unit 80 to be a component that supplies a non-hazardous non-explosive gas, the purging unit 80 may not only perform a basic function of purging the ammonia flow path, but may also perform an additional function of assisting the operation of the vent unit 50, the drain processing unit 70, or the like.

In this way, the present embodiment may implement venting, draining, and oxidation treatment of ammonia while supplying ammonia as fuel to the engine E, making it possible to construct an eco-friendly supply system.

In addition, the present embodiment may primarily collect ammonia that is suddenly discharged during a system operation using the discharge drums 51 and 52 and secondarily process the remaining ammonia through the exhaust gas treatment unit 40, making it possible to minimize unnecessary venting of ammonia and ensure a safe system operation.

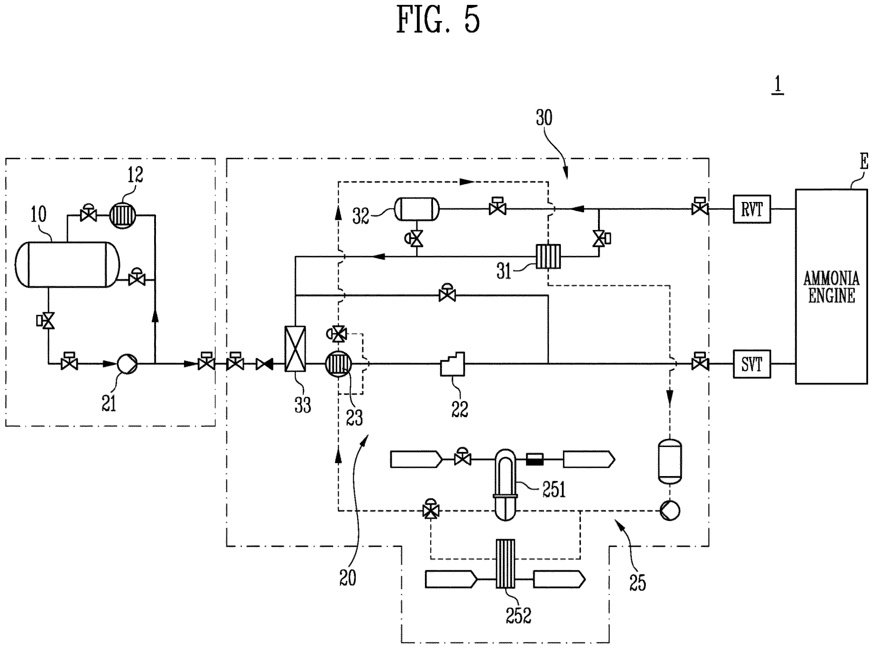

FIG. 5 is a conceptual diagram of an ammonia processing system according to a second embodiment of the present invention.

In the following, the description will focus on the differences between the present embodiment and the previous embodiment, and parts where description is omitted will be replaced with the previous content. It is noted that this also applies to other embodiments described below.

Referring to FIG. 5, in an ammonia processing system 1 according to the second embodiment of the present invention, disposition of a heat exchanger 23 of a fuel supply unit 20 and a mixer 33 of the fuel recovery unit is changed compared to the previous embodiment. In the first embodiment, the mixer 33 is disposed downstream of the heat exchanger 23 based on the ammonia flow in the fuel supply unit 20, whereas in the present embodiment, the heat exchanger 23 may be disposed downstream of the mixer 33.

In addition, a backflow prevention valve is provided upstream of the mixer 33 on the ammonia flow path of the fuel supply unit 20 so that ammonia mixed with the lubricant passing through an engine E is prevented from being delivered to an ammonia storage tank 10.

The heat exchanger 23 provided downstream of the mixer 33 may implement heating or cooling of ammonia. When the engine E is operated at low load, a recirculation amount of ammonia increases, and in this case, the ammonia in the mixer 33 has a relatively high temperature. Therefore, the heat exchanger 23 may prevent a gas from being introduced into a high-pressure pump 22 by cooling the ammonia between the mixer 33 and the high-pressure pump 22.

On the other hand, when the load on the engine E increases, since the flow rate of excess ammonia decreases, the ammonia in the mixer 33 may have a relatively low temperature, and thus the heat exchanger 23 may heat the ammonia and deliver the heated ammonia to the high-pressure pump 22.

That is, the heat exchanger 23 may heat or cool ammonia depending on the load of the engine E, and as one example, a sufficient amount of heat medium at a constant temperature may be continuously supplied to the heat exchanger 23, allowing the ammonia introduced into the heat exchanger 23 to be heated or cooled according to the temperature of the heat medium.

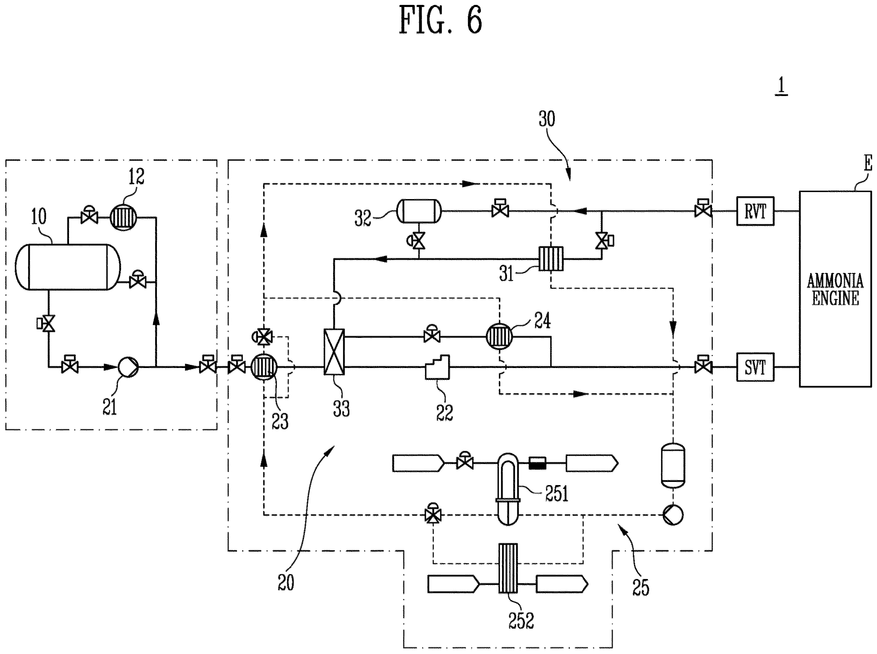

FIG. 6 is a conceptual diagram of an ammonia processing system according to a third embodiment of the present invention.

Referring to FIG. 6, an ammonia processing system 1 according to the third embodiment of the present invention may further include a return heat exchanger 24 compared to the first embodiment.

The return heat exchanger 24 adjusts the temperature of ammonia returned from downstream of a high-pressure pump 22 to upstream of a high-pressure pump 22. As described above, a return line may be provided downstream of the high-pressure pump 22, and the return heat exchanger 24 may be provided on the return line to cool the ammonia delivered from the high-pressure pump 22 to a mixer 33.

When the high-pressure pump 22 or the like is operating in a state where the engine E is not using ammonia as fuel (the engine E is stopped or the engine E is operating with a fuel other than ammonia), ammonia is heated via the high-pressure pump 22, but is not introduced into the engine E and is circulated along the return line.

In this case, since there is a risk that ammonia may be vaporized due to the heat generated by the high-pressure pump 22, the heat generated by the high-pressure pump 22 has to be removed. Therefore, in the present embodiment, the return heat exchanger 24 may be put on the return line and ammonia so that the ammonia is cooled using a refrigerant such as fresh water, sea water, glycol water, or the like. Therefore, the return heat exchanger 24 may also be referred to as a return cooler 31.

In addition, the return heat exchanger 24 may use a heat medium circulated by a heat medium supply unit 25, and in this case, the heat medium cooled by ammonia while passing through the heat exchanger 23 in front of the high-pressure pump 22 may be used.

Therefore, in the present embodiment, when the high-pressure pump 22 is operating, but ammonia downstream of the high-pressure pump 22 continues to circulate upstream of the high-pressure pump 22 as ammonia is not supplied from the high-pressure pump 22 to the engine E, ammonia downstream of the high-pressure pump 22 continues to circulate upstream of the high-pressure pump 22, the circulating ammonia may be cooled, thereby suppressing ammonia evaporation in the high-pressure pump 22 or the like.

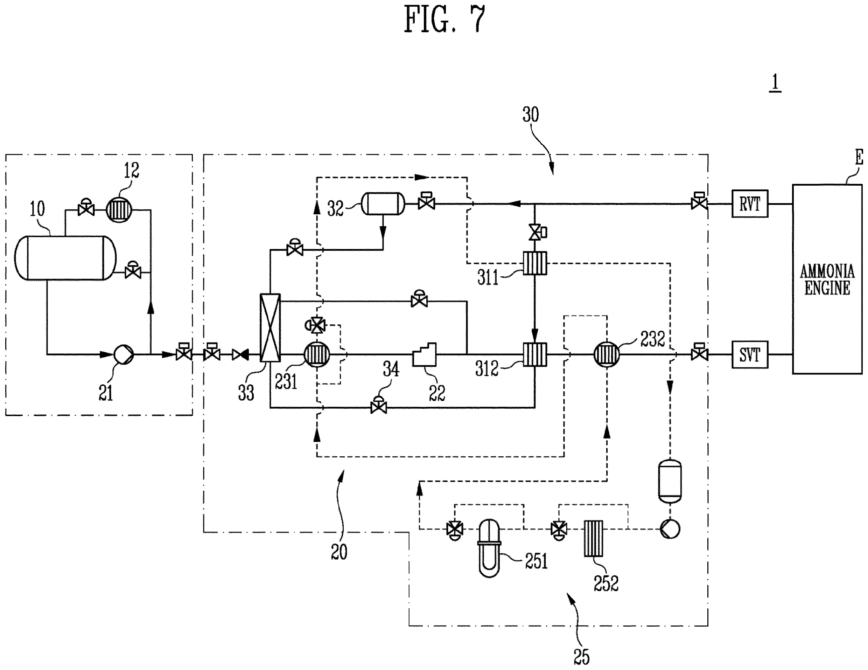

FIG. 7 is a conceptual diagram of an ammonia processing system according to a fourth embodiment of the present invention.

Referring to FIG. 7, in an ammonia processing system 1 according to the fourth embodiment of the present invention, a heat exchanger 23 of a fuel supply unit 20 may include a first heat exchanger 231 and a second heat exchanger 232. The first heat exchanger 231 may be provided between a low-pressure pump 21 and a high-pressure pump 22, and may be provided between a mixer 33 and a high-pressure pump 22, as one example. In this case, the first heat exchanger 231 may implement heating or cooling as described in the second embodiment.

The second heat exchanger 232 is provided between the high-pressure pump 22 and the engine E. The second heat exchanger 232 may heat or cool ammonia pressurized by the high-pressure pump 22 according to a required temperature of the engine E.

As will be described below, in the present embodiment, heat exchange occurs between excess ammonia and ammonia downstream of the high-pressure pump 22 by putting a second cooler 312 downstream of the high-pressure pump 22, and in this case, there is a risk that the temperature of the ammonia pressurized by the high-pressure pump 22 and then heat exchanged in the second cooler 312 may not be constant. Therefore, in the present embodiment, the second heat exchanger 232 may be provided between the second cooler 312 and the engine E so that the temperature of ammonia introduced into the engine E is constantly adjusted.

A cooler 31 of the fuel recovery unit of the present embodiment may include a first cooler 311 and a second cooler 312. The first cooler 311 may cool ammonia using a medium provided separately from ammonia, and in this case, the medium may be a heat medium used in the heat exchanger 23.

The first cooler 311 may have a similar configuration to the cooler 31 in the first embodiment described above, and may be provided in parallel to the catch drum 32 to cool excess ammonia and transfer the cooled excess ammonia to the mixer 33.

The second cooler 312 is provided downstream or upstream of the first cooler 311 and uses ammonia in the fuel supply unit 20. That is, the second cooler 312 may be a component that implements heat exchange of ammonia, and may exchange heat between excess ammonia and ammonia downstream of the high-pressure pump 22.

From a fuel supply perspective, since the temperature of the ammonia pressurized in the high-pressure pump 22 changes due to the second cooler 312 before being supplied to the engine E, as described above, the second heat exchanger 232 may be used to adjust the temperature to the required temperature of the engine E.

On the other hand, from a fuel recovery perspective, since the excess ammonia discharged from the engine E is primarily cooled in the first cooler 311 and then secondarily cooled in the second cooler 312, generation of a gas when the excess ammonia is circulated by the high-pressure pump 22 may be sufficiently suppressed. Furthermore, the fuel recovery unit may prevent evaporation by maintaining ammonia at a saturation pressure or higher of a corresponding temperature using a pressure regulating valve 34.

The pressure regulating valve 34 may be provided downstream of the cooler 31 based on flow of excess ammonia, and as one example, may be disposed between the second cooler 312 and the mixer 33. The pressure regulating valve 34 may maintain the excess ammonia passing through the second cooler 312 in a liquid phase by maintaining the ammonia flowing from the fuel recovery unit toward the fuel supply unit 20 at the saturation pressure or higher of the corresponding temperature (for example, 15 bar or more).

The pressure regulating valve 34 may maintain the excess ammonia in the second cooler 312 in a liquid phase, thereby increasing the cooling efficiency of the excess ammonia in the second cooler 312. Of course, the ammonia downstream of the pressure regulating valve 34 may change to the saturation pressure or lower as the ammonia is depressurized, but because the excess ammonia is sufficiently cooled in the second cooler 312, it is unlikely that a gas will occur downstream of the pressure regulating valve 34, and some additional cooling may be expected when the pressure is reduced.

Therefore, in the present embodiment, the heat medium is cooled through low-temperature ammonia upstream of the high-pressure pump 22 (the first heat exchanger 231), the excess ammonia is cooled with the cooled heat medium (the first cooler 311), and the pressure regulating valve 34 increases the cooling efficiency by maintaining the excess ammonia at high pressure (the second cooler 312), so that evaporation may be effectively suppressed when the excess ammonia is introduced into the high-pressure pump 22.

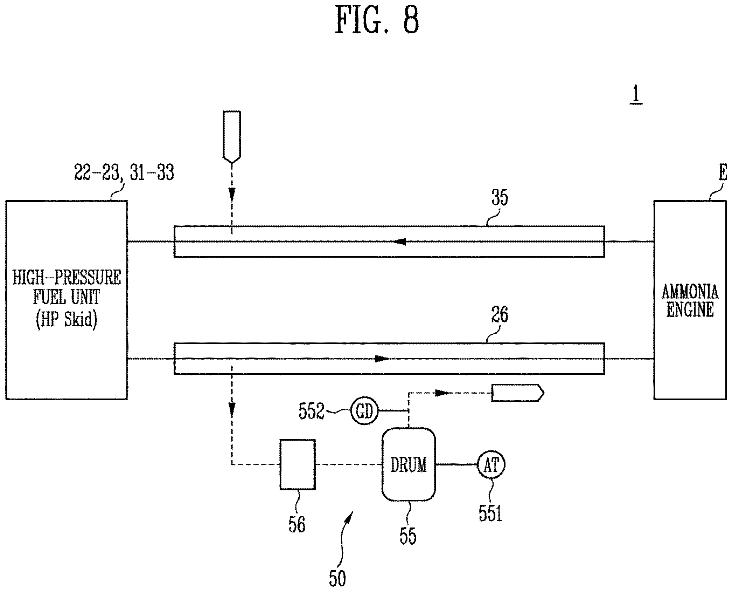

FIG. 8 is a conceptual diagram of an ammonia processing system according to a fifth embodiment of the present invention.

Referring to FIG. 8, an ammonia processing system 1 according to the fifth embodiment of the present invention includes a housing 35 in which a fuel supply unit 20 and a fuel recovery unit surround at least a portion of an ammonia flow path.

As mentioned above, the ammonia flow path may be a pipeline, and as the housing 35 surrounds an outer circumference of the pipeline, the ammonia flow path may have a double pipe structure. Therefore, the housing 35 may prevent ammonia from directly penetrating into the external space when ammonia leaks from the ammonia flow path, and the housing 35 may be filled with a non-explosive gas.

As one example, a non-explosive gas may be supplied to the housing 35 by a purging unit 80 or a vent unit 50, and the non-explosive gas circulating in the housing 35 may be discharged into the atmosphere. In the following, a case where a non-explosive vent gas is introduced into the housing 35 by the vent unit 50 will be described.

The vent unit 50 injects a vent gas into one side of the housing 35 and recovers the vent gas on the other side of the housing 35. As one example, the vent unit 50 may inject a vent gas into one side adjacent to the engine E in the housing 35 of the fuel recovery unit and recover the vent gas passing through a cooler 31 or catch drum 32 and also passing through the high-pressure pump 22 from the other side adjacent to the engine E in the housing 35 of the fuel supply unit 20. Therefore, the vent gas may circulate through most of the high-pressure part.

In this case, since there is a risk that ammonia may be mixed into the vent gas recovered from the housing 35 of the fuel supply unit 20 due to a leak in the ammonia flow path, the vent unit 50 may store the vent gas recovered from the housing 35 in the vent drum 55 rather than directly discharging the vent gas into the atmosphere.

The vent drum 55 collects ammonia contained in the vent gas using water. That is, the vent drum 55 may be a water tank, and by passing the vent gas through water, ammonia that may be mixed in the vent gas may be dissolved in the water.

In this case, a pH sensor 551 is provided in the vent drum 55. The pH sensor 551 may check whether ammonia is introduced into the vent drum 55 by measuring the pH of the water stored in the vent drum 55.

The vent gas introduced into the vent drum 55 may be discharged into the atmosphere through an outlet line, and a gas detector 552 may be provided at a portion of the vent drum 55 where the vent gas is discharged.

When the vent gas contains ammonia, the ammonia may be dissolved in water in the vent drum 55 as the vent gas passes through the water, but the ammonia that has not yet dissolved in the water may be discharged to the outside of the vent drum 55.

To prepare for the discharge, the vent unit 50 may primarily detect the introduction of ammonia into the vent drum 55 using the pH sensor 551, and may secondarily detect the presence of ammonia through the gas detector 552 at the discharge portion of the vent drum 55.

In this case, the discharge of a vent gas into the atmosphere from the vent drum 55 may be blocked depending on a detection value of the gas detector 552. In this way, even when the vent gas is discharged into the atmosphere, the risk from ammonia leakage may be sufficiently suppressed.

For reference, the vent unit 50 may use a vent fan 56 that forcibly recovers a vent gas from the housing 35 of the fuel supply unit 20 to the vent drum 55, and the vent fan 56 may be used when the pressure of the vent gas introduced into the housing 35 of the fuel recovery unit is not sufficient and the flow of the vent gas does not reach a desired level. Of course, when a high-pressure vent gas is injected into the housing 35 of the fuel recovery unit, the vent fan 56 may be minimized or omitted.

In this way, in the present embodiment, in case ammonia leaks from the ammonia flow path, pH and gas detection may be implemented in the vent drum 55 to ensure the discharging of ammonia into the atmosphere at a safe level.

In addition to the embodiments described above, the present invention encompasses all embodiments resulting from a combination of the above embodiments and known technologies.

The present invention has been described in detail through specific embodiments, but this is for detailed description of the present invention, and the present invention is not limited thereto, and it will be clear that modifications and improvements can be made by those skilled in the art within the technical spirit of the present invention.

All simple modifications or changes of the present invention fall within the scope of the present invention, and the specific scope of protection of the present invention will be made clear by the appended claims.

**[Reference Signs List]**

| | | | |
|---|---|---|---|
| 1: | Ammonia processing system | E: | Engine |
| 10: | Ammonia storage tank | 11: | Bunkering unit |
| 12: | Pressure regulating unit | 20: | Fuel supply unit |
| 21: | Low-pressure pump | 22: | High-pressure pump |
| 23: | Heat exchanger | 231: | First heat exchanger |
| 232: | Second heat exchanger | 24: | Return heat exchanger |
| 25: | Heat medium supply unit | 251: | Heat medium heater |
| 252: | Heat medium cooler | 26: | Housing |
| 30: | Fuel recovery unit | 31: | Cooler |
| 311: | First cooler | 312: | Second cooler |
| 32: | Catch drum | 33: | Mixer |
| 34: | Pressure regulating valve | 35: | Housing |
| 40: | Exhaust gas treatment unit | 50: | Vent unit |
| 51: | Low-pressure discharge drum | 52: | High-pressure discharge drum |
| 53: | Discharge processor | 531: | Discharge pump |
| 54: | Bent mast | 55: | Bent drum |
| 551: | pH sensor | 552: | Gas detector |
| 56: | Vent fan | 60: | Re-liquefaction unit |
| 70: | Drain processing unit | 71: | Drain drum |
| 711: | Liquid detector | 72: | Drain pump |
| 73: | Drain valve | 74: | Filter |
| 80: | Purging unit | | |

## Claims

1. An ammonia processing system comprising:
a fuel supply unit configured to supply ammonia discharged from an ammonia storage tank to an engine;
a fuel recovery unit configured to recover excess ammonia returned from the engine;
an exhaust gas treatment unit configured to treat an exhaust gas discharged from the engine; and
a vent unit configured to discharge ammonia discharged from the fuel supply unit or the fuel recovery unit to the outside,
wherein the vent unit includes:
a low-pressure discharge drum configured to collect low-pressure ammonia discharged from the ammonia storage tank or the fuel supply unit;
a high-pressure discharge drum configured to collect high-pressure ammonia discharged from the fuel supply unit or the fuel recovery unit; and
a discharge processor configured to process ammonia and deliver the ammonia to a vent mast, and
the low-pressure discharge drum or the high-pressure discharge drum delivers ammonia to the exhaust gas treatment unit or the discharge processor.

2. The ammonia processing system of claim 1, wherein the exhaust gas treatment unit uses at least some of the ammonia supplied to the engine by the fuel supply unit as a reducing agent.

3. The ammonia processing system of claim 1, wherein the low-pressure discharge drum and the high-pressure discharge drum deliver at least some of the collected ammonia to the ammonia storage tank.

4. The ammonia processing system of claim 1, further comprising a re-liquefaction unit configured to re-liquefy an evaporated gas discharged from the ammonia storage tank,
wherein the re-liquefaction unit delivers at least some of the evaporated gas to the low-pressure discharge drum or the exhaust gas treatment unit.

5. The ammonia processing system of claim 1, wherein the fuel supply unit includes:
a low-pressure pump configured to transfer ammonia;
a high-pressure pump configured to pressurize ammonia pressurized by the low-pressure pump to correspond to a required pressure of the engine; and
a heat exchanger configured to adjust a temperature of ammonia, and
the fuel recovery unit includes:
a cooler configured to cool the excess ammonia discharged from the engine and deliver the cooled ammonia between the low-pressure pump and the high-pressure pump in the fuel supply unit; and
a catch drum provided in parallel to the cooler and temporarily storing ammonia.

6. An ammonia processing system comprising:
a fuel supply unit configured to supply ammonia discharged from an ammonia storage tank to an engine;
a fuel recovery unit configured to recover excess ammonia returned from the engine;
an exhaust gas treatment unit configured to treat an exhaust gas discharged from the engine; and
a vent unit configured to discharge ammonia discharged from the fuel supply unit or the fuel recovery unit to the outside,
wherein the exhaust gas treatment unit oxidizes ammonia, and
the vent unit includes a discharge processor configured to collect ammonia discharged from the ammonia storage tank, the fuel supply unit, or the fuel recovery unit, mix water with the ammonia, and deliver the mixed ammonia to the exhaust gas treatment unit.

7. The ammonia processing system of claim 6, wherein the vent unit further includes a discharge drum configured to collect ammonia discharged from the ammonia storage tank, the fuel supply unit, or the fuel recovery unit and deliver the collected ammonia to the discharge processor or the exhaust gas treatment unit, and
the discharge processor collects the ammonia using water and delivers the ammonia water to the exhaust gas treatment unit.

8. The ammonia processing system of claim 7, further comprising a purging unit configured to purge the fuel supply unit or the fuel recovery unit using a non-explosive gas,
wherein the purging unit delivers the non-explosive gas to the discharge drum so that a pressure of the discharge drum is regulated to be higher than that of the discharge processor or the exhaust gas treatment unit.

9. An ammonia processing system comprising:
a fuel supply unit configured to supply ammonia discharged from an ammonia storage tank to an engine;
a fuel recovery unit configured to recover excess ammonia returned from the engine;
an exhaust gas treatment unit configured to treat an exhaust gas discharged from the engine; and
a vent unit configured to discharge ammonia discharged from the fuel supply unit or the fuel recovery unit to the outside,
wherein the fuel supply unit includes:
a low-pressure pump configured to transfer ammonia;
a high-pressure pump configured to pressurize ammonia pressurized by the low-pressure pump to correspond to a required pressure of the engine; and
a heat exchanger configured to adjust a temperature of ammonia, and
the fuel recovery unit includes:
a cooler configured to cool the excess ammonia discharged from the engine and deliver the cooled ammonia between the low-pressure pump and the high-pressure pump in the fuel supply unit; and
a pressure regulating valve provided downstream of the cooler to maintain ammonia flowing from the fuel recovery unit toward the fuel supply unit at a saturation pressure or higher at a corresponding temperature.

10. The ammonia processing system of claim 9, wherein the fuel recovery unit further includes a mixer configured to mix the excess ammonia discharged from the engine with ammonia between the low-pressure pump and the high-pressure pump in the fuel supply unit, and
the pressure regulating valve is provided between the cooler and the mixer.

11. The ammonia processing system of claim 9, wherein the cooler includes:
a first cooler configured to cool the ammonia using a medium provided separately from ammonia; and
a second cooler provided downstream or upstream of the first cooler and using the ammonia from the fuel supply unit.

12. The ammonia processing system of claim 10, wherein the heat exchanger includes:
a first heat exchanger provided between the low-pressure pump and the high-pressure pump; and
a second heat exchanger provided between the high-pressure pump and the engine,
the first heat exchanger is provided between the mixer and the high-pressure pump, and
the second heat exchanger is provided between a second cooler and the engine.

13. A ship comprising the ammonia processing system of any one of claims 1, 6, and 9.
